# EUROPEAN PATENT APPLICATION

(11) **EP 2 114 074 A2**
(43) Date of publication of application: **04.11.2009**
(21) Application number: 09156154.8
(22) Date of filing: 25.03.2009
(51) Int. Cl.: H04N 7/173

(54) **Content delivery system, repeater, terminal device, content delivery method, program and recording medium**

(30) Priority: 02.04.2008 JP 2008095909
(71) Applicant: NEC Corporation, Minato-ku Tokyo (JP)
(72) Inventor: Nagashio, Tomofumi, Tokyo (JP)
(74) Representative: Betten & Resch

(57) **Abstract**

The present invention aims to provide a content delivery system capable of timely and quickly delivering an emergency broadcast independently of conditions of a network in a broadcasting service using an IP network. For the purpose, the content delivery system according to the present invention includes a repeater for relaying content and a user terminal for transferring the relayed content to a TV receiver. The repeater includes: a data obtaining unit that mounts a first port for obtaining video data from a video server via an IP network and a second port for obtaining emergency data from an emergency server directly connected to the repeater; and a data preferential transfer unit that transfers the emergency data obtained from the second port to the user terminal in preference to the video data obtained from the first port. The user terminal includes a data creation unit for performing format conversion of the video data and the emergency data received from the repeater to create display video data to be displayed on the TV receiver.

## Description

This application is based upon and claims the benefit of priority from Japanese patent application No.2008-095909, filed on April 2, 2008, the disclosure of which is incorporated herein in its entirety by reference.

### BACKGROUND OF THE INVENTION

### Field of the Invention

The present invention relates to content delivery systems, repeaters, terminal devices, content delivery methods, programs and recording media, and in particular to a technology suitably used for timely providing emergency broadcasts in a broadcast content delivery service using an IP network.

### Description of Related Art

As the Internet has been widely used and connection between an end-user and the Internet has been made broadband, there are many services for delivering broadcast content composed of image and audio via an IP network. Generally, terrestrial TV broadcasting and satellite TV broadcasting will immediately broadcast, for example, emergency information about an occurrence of a catastrophic disaster or an important event in the way of emergency broadcasting after their programs on air are interrupted, or displaying telop data superimposed on a program on air. In such a way, emergency information has to be provided for viewing audience in preference to a current program on air.

However, conditions have not been satisfied to provide a preferential broadcast of emergency information in a conventional broadcasting service via an IP network. Accordingly, in broadcasting services using an IP network, a TV receiver does not have a function of receiving data from an emergency broadcast, and at the time when an emergency occurs, sometimes, a timely emergency broadcast is not delivered.

In addition, when, in the broadcasting services described above, an emergency broadcast is provided, an IP network is used to carry the emergency broadcast, and at this time, there may be a delay produced on passing through the IP network, a disconnection in the network caused by a disaster and the like. If such a delay, disconnection of the network or the like occurs, a time-lag from the start of broadcasting to delivery occurs, and information of a high level of emergency, therefore, cannot be quickly delivered to viewing audience. Accordingly, concerning an emergency broadcast that has to be delivered as quickly as possible, it is desirable to avoid passing through an IP network in which a delay of an unpredictable time may occur.

For example, Japanese Patent Laid Open Publication No. 2003-348034 discloses an emergency information broadcasting system that can automatically receive an emergency broadcast in a state of emergency, quickly obtain information about the safety in a time of serious disaster, and deliver it as emergency information. The emergency information broadcasting system, after sending a message about an emergency broadcast will be made to a viewing terminal through a communication line, broadcasts the emergency information via airwaves when an emergency information broadcasting device broadcasts the emergency information.

Further, for example, Japanese Patent Laid Open Publication No. 2006-304087 discloses an emergency information delivery system for securing quick delivery of emergency information to families, communal facilities and the like connected via a network. In the emergency information delivery system, an emergency information delivery server transmits a call signal to an emergency signal generating unit in a subscriber station, and the emergency signal generating unit receives the call signal through switching equipment and generates an emergency signal using a free frequency band of a telephone line. Then, the subscriber station transmits the emergency signal to the residence of a subscriber, and it receives the emergency signal through a subscriber splitter and converts the emergency signal into a serial signal using an emergency signal model to transmit it to a terminal device.

Further, for example, Japanese Patent Laid Open Publication No. 2005-236913 discloses a content insertion method capable of corresponding to a user's request flexibly when insertion content such as a CM broadcast or an emergency broadcast is inserted into broadcast content delivered through multicast broadcasting. The content insertion method determines insertion conditions based on priority levels from insertion conditions included in the broadcast content, insertion conditions included in the insertion content and insertion conditions input from a user terminal. Then, the method controls in a manner that the reading out of the broadcast content is suspended during the time period from the start of reading out the insertion content to the completion of reading out the data to output it, and the broadcast content is again read out immediately after the completion of reading out the insertion content.

In the emergency information broadcasting system disclosed in Japanese Patent Laid Open Publication No. 2003-348034, a message informing about broadcasting emergency information is transmitted via a network, and the emergency information is broadcast via airwaves rather than the network. Further, the emergency information delivery system disclosed in Japanese Patent Laid Open Publication No. 2006-304087 is limited to an ADSL line using an existing phone line, and configured with a dedicated device such as an ADSL modem. Accordingly, it is difficult to apply the technologies disclosed in Japanese Patent Laid Open Publications No. 2003-348034 and No. 2006-304087 precisely to a broadcasting service using an IP network, and even if applied, an emergency broadcast cannot be timely delivered when an emergent state occurs, and unfortunately, this problem may not be resolved.

The content insertion method disclosed in Japanese Patent Laid Open Publication No. 2005-236913 is surely the technology that can apply to a broadcasting service using an IP network. However, a method is ambiguous how to evaluate priority levels, that is, a key to determine insertion conditions, based on insertion conditions given by three parties of a broadcast content provider, an insertion content provider and a user. Also for the purpose of providing flexibility in corresponding to a user's request, it is not likely to realize timely delivery of broadcast content such as an emergency broadcast. Further, when a network failure event or the like occurs in an IP network, a time-lag in delivery of emergency information cannot be prevented from occurring, and information having a high level of emergency cannot be quickly delivered to viewing audience.

### SUMMARY OF THE INVENTION

The present invention has been made in view of circumstances described above, and an object thereof is to provide a content delivery system and a content delivery method capable of timely and quickly delivering of an emergency broadcast such as emergency information about a disaster or an incident independently of conditions of a network in a broadcasting service using an IP network.

To achieve such an object, the present invention has the following features.

### <Content delivery system>

A content delivery system according to one aspect of the present invention includes a repeater for relaying content and a user terminal of a terminal device on the side of a receiving user for obtaining the content from the repeater to transfer to a TV receiver, in which the repeater includes: a data obtaining unit that mounts a first port for obtaining video data from a video server delivering the video data as the content via an IP network and a second port for obtaining emergency data from an emergency server directly connected to the repeater and delivers the emergency data as the content; and a data preferential transfer unit that transfers the emergency data obtained from the second port to the user terminal in preference to the video data obtained from the first port, and in which the user terminal includes a data creation unit for performing format conversion of the video data and the emergency data received from the repeater to create display video data to be displayed on the TV receiver.

### <Repeater>

Further, a repeater according to one aspect of the present invention configures a content delivery system along with a user terminal of a terminal device on the side of a receiving user for obtaining content to transfer to a TV receiver, and relays the content, the repeater including: a data obtaining unit that mounts a first port for obtaining video data from a video server delivering the video data as the content via an IP network and a second port for obtaining emergency data from an emergency server directly connected to the repeater and delivers the emergency data as the content; and a data preferential transfer unit that transfers the emergency data obtained from the second port, in preference to the video data obtained from the first port, to the user terminal which performs format conversion of the video data and the emergency data to create display video data to be displayed on the TV receiver.

### <Terminal device>

Further, a terminal device according to one aspect of the present invention configures a content delivery system along with a repeater for relaying content and is the terminal device on the side of a receiving user for obtaining the content to transfer to a TV receiver, the terminal device including a data creation unit for performing format conversion of video data and emergency data received from the repeater to create display video data to be displayed on the TV receiver, in which the repeater including: a data obtaining unit that mounts a first port for obtaining the video data from a video server via an IP network and a second port for obtaining the emergency data from an emergency server directly connected to the repeater; and a data preferential transfer unit that transfers the emergency data obtained from the second port in preference to the video data obtained from the first port.

### <Content delivery method>

Further, a content delivery method according to one aspect of the present invention is the content delivery method for a content delivery system including a repeater for relaying content and a user terminal of a terminal device on the side of a receiving user for obtaining the content from the repeater to transfer to a TV receiver, the method including: in the repeater, a first data obtaining step of obtaining, from a first port, video data delivered by a video server as the content via an IP network; a second data obtaining step of obtaining, from a second port, emergency data delivered as the content by an emergency server directly connected to the repeater; and a data preferential transfer step of transferring the emergency data obtained from the second port by the second data obtaining step to the user terminal in preference to the video data obtained from the first port by the first data obtaining step, and the method further including: in the user terminal, a data creation step of performing format conversion of the video data and the emergency data received from the repeater to create display video data to be displayed on the TV receiver.

### <Program>

Further, a program according to one aspect of the present invention is the program used for a content delivery system including a repeater for relaying content and a user terminal of a terminal device on the side of a receiving user for obtaining the content from the repeater to transfer to a TV receiver, the program serving to allow a computer of the repeater to realize a data preferential transfer function of transferring emergency data obtained from a second port to the user terminal in preference to video data obtained from a first port, in which the repeater mounts the first port for obtaining the video data from a video server delivering the video data as the content via an IP network and the second port for obtaining the emergency data from an emergency server directly connected to the repeater and delivering the emergency data as the content, and the program serving to allow a computer of the terminal device to realize a data creation function of performing format conversion of the video data and the emergency data received from the repeater to create display video data to be displayed on the TV receiver.

### <Recording medium>

Further, a recording medium according to one aspect of the present invention is the computer-readable recording medium which records the program.

### BRIEF DESCRIPTION OF THE DRAWINGS

The objects and features of the present invention will become more apparent from the consideration of the following detailed description taken in conjunction with the accompanying drawings, in which:
Fig. 1 shows a configuration of a content delivery system according to the present invention;
Fig. 2 shows a configuration of a content delivery system according to a first exemplary embodiment of the present invention;
Fig. 3 is a flowchart showing a flow of data preferential transfer processing according to the first exemplary embodiment of the present invention;
Fig. 4 is a flowchart showing a flow of display data creation processing according to the first exemplary embodiment of the present invention;
Fig. 5 shows a structure of an IP packet according to the first exemplary embodiment of the present invention; and
Fig. 6 shows a configuration of a content delivery system according to a second exemplary embodiment of the present invention.

### EXEMPLARY EMBODIMENT

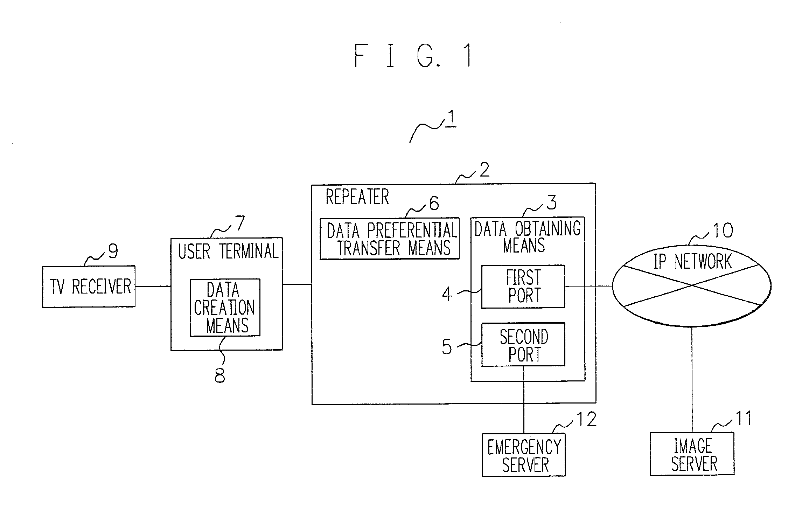

A content delivery system to which the present invention is applied, as shown in Fig. 1, comprises: a repeater 2 for obtaining content from an image server 11 via an IP network 10 and obtaining the content directly from an emergency server 12, and relaying the content obtained; and a user terminal 7 for transmitting the content from the repeater 2 to a TV receiver 9. The repeater 2 comprises: a data obtaining means 3 mounting a first port 4 and a second port 5; and a data preferential transfer means 6. Also, the user terminal 7 includes a data creation means 8.

The repeater 3 obtains, by the data obtaining means 3, as the content, video data input from the first port 4 and emergency data input from the second port 5, respectively. The first port 4 is the physical port for receiving the video data delivered by the image server 11 via the IP network 10. The second port 5 is the physical port for receiving the emergency data delivered by an emergency server 12 directly connected to the repeater 2. Also, the repeater 3 transfers, by the data preferential transfer means 6, the data (emergency data) input from the second port to the user terminal 7 in preference to the data (video data) input from the first port.

The user terminal 7, by the data creation means 8, performs format conversion of the video data and the emergency data received from the repeater 2 to be displayed on a screen of the TV receiver 9. The data creation means 8 performs format conversion of the video data to be output as audio and image data, and converts the emergency data into telop data. Then, the data creation means 8 superimposes the emergency data converted into the telop data on the video data which has been format-converted to synthesize both data, thus creating display video data to be displayed on the TV receiver 9.

In the present invention, the data obtaining means 3 obtains emergency broadcast data directly from the emergency server rather than via the IP network 10. Accordingly, the emergency broadcast data can be obtained without being affected by a delay produced on passing through the IP network 10, a network failure event and the like, and thus allowing timely delivery of an emergency broadcast to viewing audience without a time-lag from the start of broadcasting to delivery. Further, ports for receiving data, or the first port 4 for obtaining the video data and the second port 5 for obtaining the emergency broadcast data, are separately provided, and the data preferential transfer means 6 preferentially transfers the emergency broadcast data input from the second port to the user terminal 7. On transferring the data, the preferential control is carried out in the physical ports without analyzing a packet to confirm a flag, which can maintain latency at a much lower level, and thus allowing a high-speed operation.

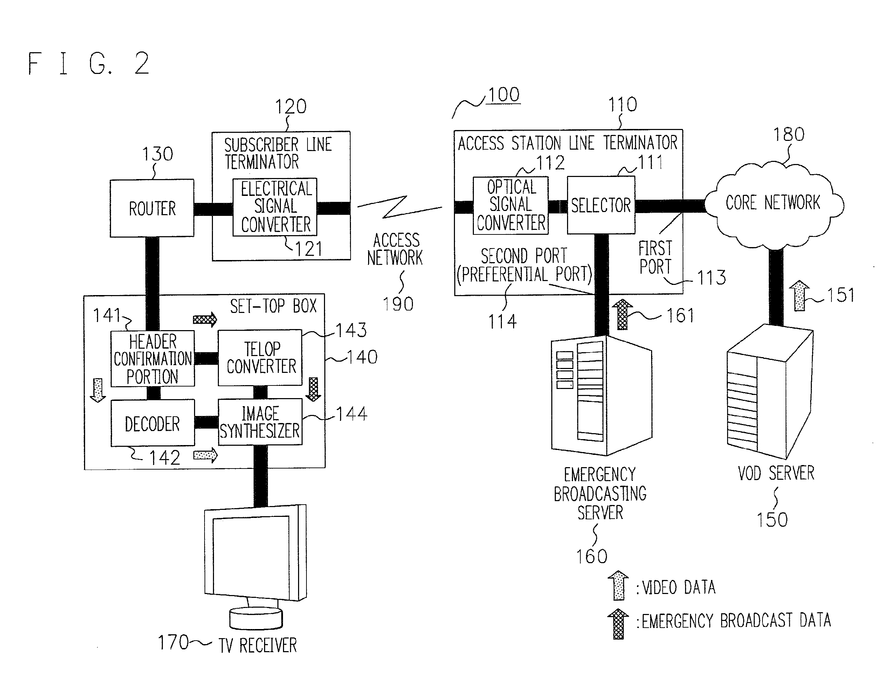

Now, exemplary embodiments of the present invention will be hereinafter described with reference to Figs. 2-6.

### <First exemplary embodiment>

Fig. 2 shows a configuration of a content delivery system according to a first exemplary embodiment of the present invention. The content delivery system 100 of the present embodiment comprises an access station line terminator 110, a VOD (Video on Demand) server 150, an emergency broadcasting server 160, a subscriber line terminator 120, a router 130, a set-top box 140 and a TV receiver 170. The access station line terminator 110 is connected to the VOD server 150 through a core network 180, and connected to the subscriber line terminator 120 through an access network 190. The core network 180 is a trunk communication line having a large capacity, and the access network 190 is a network between an access station and a subscriber, for example, an optical network in the embodiment.

The access station line terminator 110 corresponds to the repeater 2 (Fig. 1), the set-top box 140 corresponds to the user terminal 7 (Fig. 1), the VOD server 150 corresponds to the image server 11 (Fig. 1), the emergency broadcasting server 160 corresponds to the emergency server 12 (Fig. 1), the TV receiver 170 corresponds to the TV receiver 9 (Fig. 1), and the core network 180 corresponds to the IP network 10 (Fig. 1).

The access station line terminator 110 includes a selector 111 and an optical signal converter 112, and mounts a first port 113 and a second port 114. In addition, the access station line terminator 110 may include, for example, an OLT (Optical Line Terminal). The first port 113 and the second port 114 correspond to the first port 4 and the second port 5 (Fig. 1) as the data obtaining means 3 (Fig. 1), respectively. Also, the selector 111 corresponds to the data preferential transfer means 6 (Fig. 1).

The first port 113 is a physical port for receiving video data 151 delivered by the VOD server 150 connected via the core network 180. The second port 114 is a physical port for receiving emergency broadcast data 161 delivered by the emergency broadcasting server 160 directly connected to the access station line terminator 110, which is a preferential port for transferring data in preference to the first port. The selector 111 preferentially transfers the emergency broadcast data 161 input from the preferential port, that is, the second port, to the optical signal converter 112. The optical signal converter 112 converts an electrical signal into an optical signal which is a signal on the access network 190.

The subscriber line terminator 120 is connected to the access station line terminator 110 via the access network 190, and connected to the router 130. Then, an electrical signal converter 121 converts an optical signal into an electrical signal. Note that the subscriber line terminator 120 may include, for example, an ONU (Optical Network Unit). Also, the router 130 is connected to the subscriber line terminator 120 and the set-top box 140, and forwards an IP packet received from the subscriber line terminator 120.

The set-top box 140 includes a header confirmation portion 141, a decoder 142, a telop converter 143 and an image synthesizer 144, and is connected to the router 130 and the TV receiver 170. The header confirmation portion 141, the decoder 142, the telop converter 143 and the image synthesizer 144 correspond to the data creation means 8 (Fig. 1).

The header confirmation portion 141 analyzes an IP packet forwarded from the router to make a determination of video data or emergency broadcast data based on contents of an IP header. Further, the header confirmation portion 141 transmits the video data 151 to the decoder 142, and transmits the emergency broadcast data 161 to the telop converter 143. The decoder 142 performs format-conversion an image signal included in the video data 151 received from the header confirmation 141, that is, converts the IP packet into image and audio data. The format of the image signal used may be, for example, MPEG2-TS (Transport Stream).

The telop converter 143 converts the emergency broadcast data 161 received from the header confirmation portion 141 into a telop data format. The telop data may be only superimposed on the image and audio data to be displayed, and the telop data may be video data such as bitmap data. The image synthesizer 144 superimposes the telop data converted by the telop converter 143 on the image and audio data which have been format-converted by the decoder 142 to synthesize both data, thus creating display data to be displayed on the TV receiver 170.

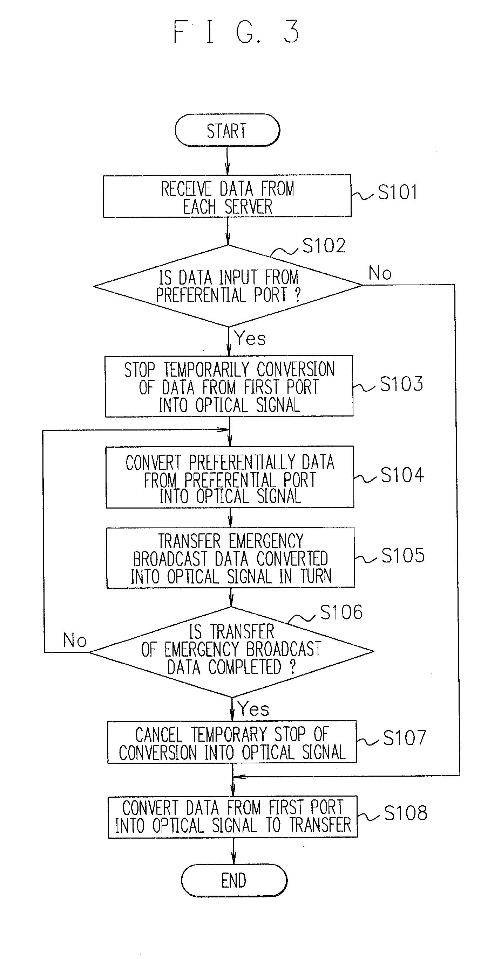

Fig. 3 is a flowchart showing a flow of data preferential transfer processing according to the present embodiment. First, the access station line terminator 110 receives data from the VOD server 150 and the emergency broadcasting server 160 through the first port 113 and the second port 114 (step S101). Then, the selector 111 determines from which of the ports the data obtained is input (step S102).

When the data obtained is input from the preferential port (YES at step S102), that is, the emergency broadcast data 161 is input from the second port 114, then the selector 111 makes the optical signal converter 112 stop temporarily current conversion of data received from the first port (video data 151) into an optical signal (step S103). Then, the selector 111 makes the optical signal converter 112 convert preferentially the emergency broadcast data 161 received from the second port 114 into an optical signal (step S104), and transfers in turn the emergency broadcast data 161 converted into the optical signal to the subscriber line terminator 120 (step S105). The steps described above are repeated until the conversion into the optical signal and the transfer of the emergency broadcast data 161 are completed (NO at step S106).

Then, when the transfer of the emergency broadcast data 161 input from the second port 114 is completed (YES at step S106), the selector 111 cancels the temporary stop of conversion into the optical signal (step S107), instructs conversion of the video data 151 input from the first port 113 into an optical signal, and transfers the converted data to the subscriber line terminator 120 (step S108).

The function of the selector 111 of processing the flow described above may correspond to a so-called QoS (Quality of Service) in which, after securing a band to transmit data having a higher level of priority in order to secure a certain transfer speed, other data is transmitted. In fact, the selector 111, to secure a transfer speed at which emergency broadcast data having a higher level of priority is transferred, converts an electrical signal of emergency broadcast data into an optical signal in preference to that of video data and transfers it to the subscriber line terminator 120. At this time, the access station line terminator 110 does not have to analyze an IP packet to check an emergency flag point by point, and it can determine preferential processing dependent on the port from which data is input, which can maintain latency at a much lower level, thus allowing a high-speed operation.

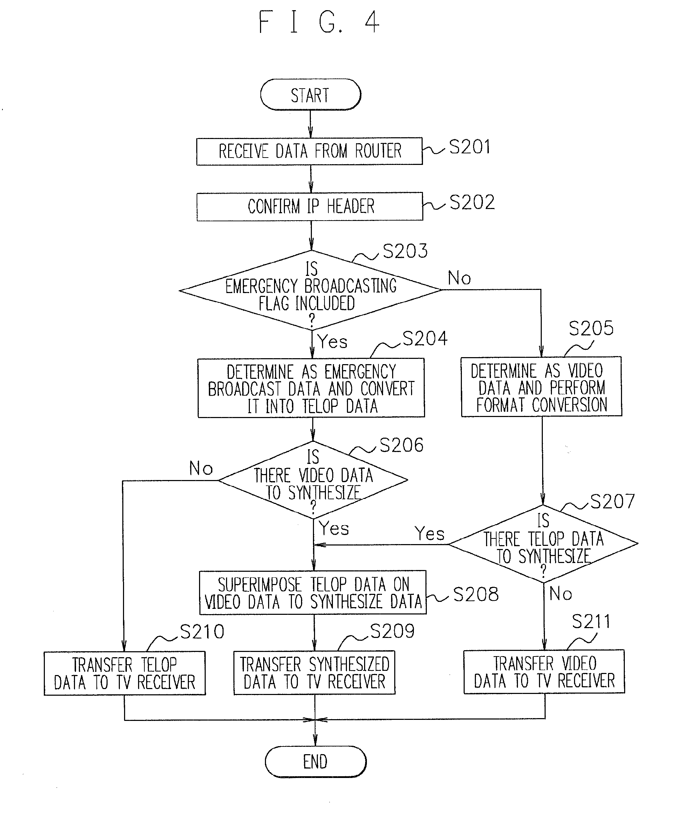

Fig. 4 is a flowchart showing a flow of creation processing of display video data according to the present embodiment. First, the set-top box 140 receives data converted into an electrical signal from the router 130 (step S201). Then, the header confirmation portion 141 analyzes an IP packet included in the data received, and confirms an IP header (step S202).

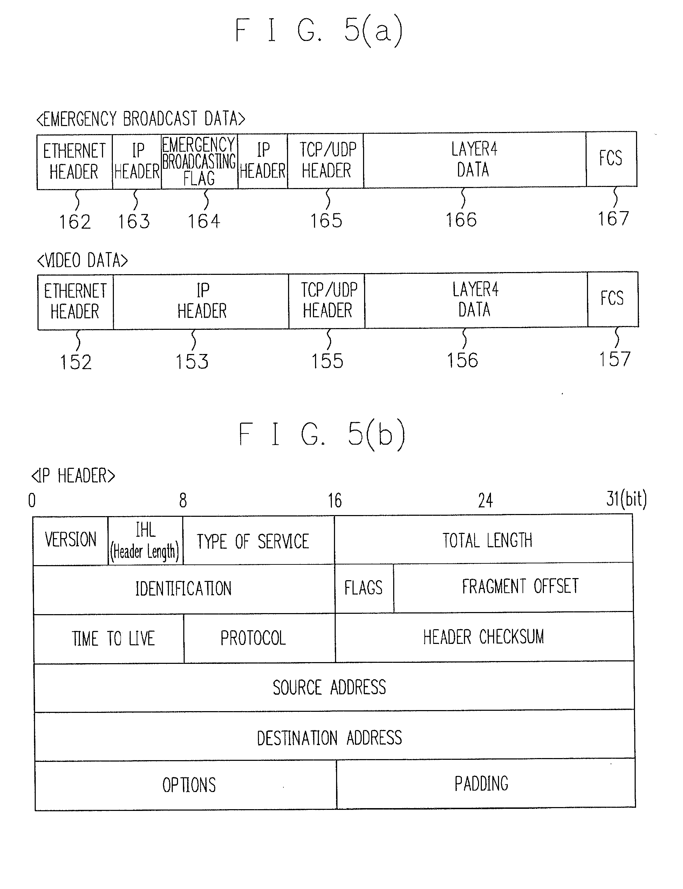

Fig. 5 illustrates a structure of the IP packet. Fig. 5a shows data structures of the emergency broadcast data 161 and the video data 151, and Fig. 5b shows a structure of the IP header. Data flowing on the core network 180, generally, similar to the video data 151, may be composed of an Ethernet (registered trademark) header 152, an IP header 153, a TCP/UDP header 155, Layer4 data 156, and FCS 157.

The Ethernet (registered trademark) header 152 is a top data field of an Ethernet (registered trademark) frame, which may include a destination MAC address and a source MAC address. The IP header 153 is a top data field of the IP packet, which may include a destination IP address and a source IP address. The TCP/UDP header 155, similar to the Ethernet (registered trademark) header 152 and the IP header 153, may include a destination port and a source port. The Layer4 data 156 is a portion including headers and data having levels equal to or higher than those of a Layer5, into which portion data contents are contained in the present embodiment. The FCS 157 is a field used for checking whether a frame is broken or not.

The emergency broadcast data 161, according to the present embodiment, is designed to be distinguished from the video data by the existence of an emergency broadcasting flag 164 which is buried in the IP header 163. The emergency broadcasting flag 164 is buried in an optional portion (Options in Fig. 5b) of the IP header 163. Burying the emergency broadcasting flag 164 enables the set-top box 140 to determine whether a packet to be processed is emergency broadcast data or not, thus allowing a high-speed judgment.

Return to the flow in Fig. 4, when the emergency broadcasting flag is included in the IP header (YES at step S203), the header confirmation portion 141 determines that the data from the router 130 is the emergency broadcast data 161, and sends it to the telop converter 143. Then, the telop converter 143 converts the obtained data into telop data (step S204). When video data 151 which has been format-converted exists (YES at step S206), the image synthesizer 144 superimposes the telop data on the data to synthesize data, thus creating display data (step S208). Then, the image synthesizer 144 transfers the created display data to the TV receiver 170 (step S209).

After the telop converter 143 converts the emergency broadcast data 161 into the telop data, when no video data which has been format-converted exists and situations allow data to be transmitted to the TV receiver 170 (NO at step S206), then the image synthesizer 144 transfers the telop data to the TV receiver 170 (step S210). At this time, only the emergency broadcast telop data is displayed on the TV receiver 170.

On the contrary, when the emergency broadcasting flag is not included in the IP header (NO at step 203), the header confirmation portion 141 determines that the data from the router 130 is the video data 151, and sends it to the decoder 142. Then, the decoder 142 performs format conversion of an image signal of the received data (step S205). When emergency broadcast data 161 converted into telop data exists (YES at step S207), the image synthesizer 144 synthesizes the video data and the telop data to create display data (step S208). When no emergency broadcast data converted into telop data exists (NO at step S207), the image synthesizer 144 transfers only the video data 151 which has been format-converted to the TV receiver 170 (step S211). At this time, only the image content delivered by the VOD server 150 is displayed on the TV receiver 170.

Note that, in the present embodiment, as described above, the signal flowing on the access network 190 is considered as an optical signal, but not limited to this, and the signal may include any signals using an IP. That is, the access network 190 may include, for example, LAN (Local Area Network) and WLAN (Wireless LAN). When the access network 190 is LAN or WLAN, the conversion means between an electrical signal and an optical signal becomes unnecessary, and the optical signal converter 112 and the electrical signal converter 121, in Fig. 2, may be omitted.

The first exemplary embodiment described above is configured so that the emergency broadcasting server is connected directly to the access station line terminator, and accordingly the emergency broadcast data does not have to pass through the core network, thus allowing quick delivery of an emergency broadcast to a user. Further, even if the core network becomes unavailable due to a disaster, the delivery can be carried out.

Also, according to the first exemplary embodiment described above, the access station line terminator uses the selector to perform the data preferential processing (data transfer control) correspondingly to the physical ports, and a packet does not have to be analyzed to check the emergency flag, which can maintain latency at a much lower level, and thus allowing a high-speed operation.

### <Second exemplary embodiment>

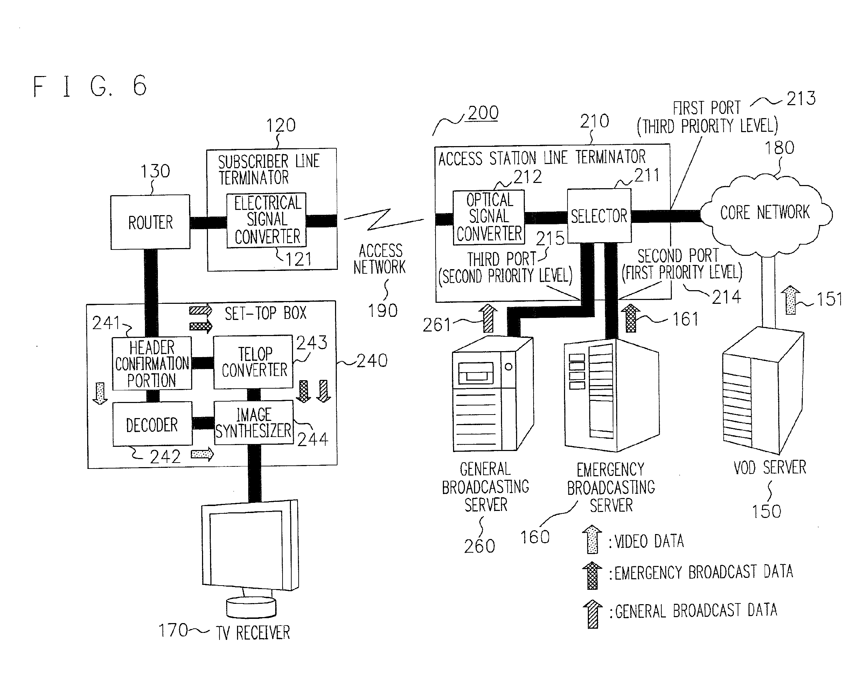

Fig. 6 shows a configuration of a content delivery system according to a second exemplary embodiment of the present invention. The point of difference between the present embodiment and the first exemplary embodiment is that an access station line terminator 210 is provided with three physical ports, and a priority level is respectively assigned to data input from each of the ports to control transfer of data. Portions of the configuration common to both embodiments will not be further described, and only the point of difference will be described.

In the content delivery system 200 according to the present embodiment, an access station line terminator 210 is provided with a first port 213, a second port 214 and a third port 215. The first port 213 and the second port 214 receive video data 151 and emergency broadcast data 161, respectively, from a VOD server 150 and an emergency broadcasting server 160, respectively, and the third port 215 receives general broadcast data from a general broadcasting server 260. The general broadcast data is information having an emergency level lower than the emergency broadcast data, for example, current news to be delivered at fixed intervals. In Fig. 6, the VOD server 150 is connected to the access station line terminator 210 via a core network 180, and the emergency broadcasting server 160 and the general broadcasting server 260 are connected directly to the access station line terminator 210, but the access station line terminator 210 may be configured to obtain data from the general broadcasting server 260 via the core network 180.

Further, a selector 211 converts data input from the second port 214 (emergency broadcast data 161) into an optical signal at a first priority level and transfers the converted optical signal to a subscriber line terminator 120. Then, the selector 211 converts data input from the third port 215 (general broadcast data 261) into an optical signal at a second priority level, and transfers the converted optical signal to the subscriber line terminator 120. After the transfer of the data input from the second port 214 and the third port 215 is completed, the selector 211 converts data input from the first port 213 (video data 151) into an optical signal, and transfers the converted optical signal to the subscriber line terminator 120.

According to the second exemplary embodiment, not limited to the emergency broadcasting server, a plurality of other various servers (for example, three or more servers) may be connected to the access station line terminator 210, and a priority level is respectively assigned to data obtained from each of the servers connected, and preferential processing is carried out, thus allowing smooth delivery of various types of data according to their priority level. Also, the emergency broadcasting server and the like are connected directly to the access station line terminator, so that an emergency broadcast can be delivered to a user at a high speed independently of conditions of the core network and the like. Also, the data preferential processing is performed correspondingly to the physical ports using the selector, which can maintain latency at a much lower level, and thus allowing a high-speed operation.

In such a manner, the present invention has been described with reference to the embodiments, and the present invention provides an advantageous effect that emergency broadcasts such as information about a disaster or an incident can be quickly and timely delivered independently of conditions of a network in broadcasting services using an IP network.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

That is, a program executed in the content delivery system according to the embodiments is modularly-configured, including each portion described above (the selector, the header confirmation portion, the image synthesizer and the like), and specific means thereof is realized using actual hardware. In other words, a computer (CPU) reads out and executes the program from a predetermined recording medium, and thus each portion described above is loaded in main memory to create the selector, the header confirmation portion, the image synthesizer and the like.

The program according to the embodiments executed in the content delivery system may be configured to be stored on a computer connected to a network such as the Internet and provided by downloading via a network. In addition, the program described above may be configured to be provided or distributed via a network such as the Internet.

Also, the program described above may be configured to be recorded in an installable or executable file in a computer-readable recording medium such as a floppy disk (registered trademark), a hard disc, an optical disc, a magnetic optical disc, a CD-ROM, a CD-R, a DVD and a nonvolatile memory card to be provided. Further, the program described above may be configured to be stored beforehand in a ROM and the like to be provided.

In these cases, a program code itself read out from any of the recording media described above or downloaded through a communication line, and executed will realize the function of the embodiments described above. Therefore, the recording media which record the program code will configure the present invention.

An example 1 describes a content delivery system comprising a repeater for relaying content and a user terminal of a terminal device on the side of a receiving user for obtaining the content from the repeater to transfer to a TV receiver, wherein the repeater comprises:
data obtaining means for mounting a first port for obtaining video data from a video server delivering the video data as the content via an IP network and a second port for obtaining emergency data from an emergency server directly connected to the repeater and delivering the emergency data as the content; and
data preferential transfer means for transferring the emergency data obtained from the second port to the user terminal in preference to the video data obtained from the first port, and
the user terminal comprises:
   data creation means for performing format conversion of the video data and the emergency data received from the repeater to create display video data to be displayed on the TV receiver.

An example 2 describes the content delivery system according to the example 1, wherein the data preferential transfer means secures a transfer capability enough to realize a predetermined transfer speed and transfers the emergency data to the user terminal when the emergency data is obtained from the second port by the data obtaining means.

An example 3 describes the content delivery system according to the example 1 or 2, wherein the data creation means converts the emergency data into telop data, converts the video data into a display format of data for the TV receiver and synthesizes the video data converted into the display format of data and the telop data to create the display video data.

An example 4 describes the content delivery system according to any one of the examples 1 to 3, wherein the data preferential transfer means secures a transfer capability enough to realize a predetermined transfer speed and transfers the emergency data to the user terminal in preference to the video data when the emergency data is obtained from the second port by the data obtaining means during transfer of the video data from the first port.

An example 5 describes the content delivery system according to any one of the examples 1 to 4, wherein the data creation means makes a determination of the emergency data or the video data based on presence or absence of an emergency flag included in data received from the repeater.

An example 6 describes the content delivery system according to any one of the examples 1 to 4, wherein the data obtaining means mounts three or more ports, and the data preferential transfer means assigns a priority level respectively to data obtained from each of the ports and transfers data to the user terminal according to the priority level.

An example 7 describes a repeater configuring a content delivery system along with a user terminal of a terminal device on the side of a receiving user for obtaining content to transfer to a TV receiver and relaying the content, comprising:
data obtaining means for mounting a first port for obtaining video data from a video server delivering the video data as the content via an IP network and a second port for obtaining emergency data from an emergency server directly connected to the repeater and delivering the emergency data as the content; and
data preferential transfer means for transferring the emergency data obtained from the second port, in preference to the video data obtained from the first port, to the user terminal for performing format conversion of the video data and the emergency data to create display video data to be displayed on the TV receiver.

An example 8 describes the repeater according to the example 7, wherein the data preferential transfer means secures a transfer capability enough to realize a predetermined transfer speed and transfers the emergency data to the user terminal when the emergency data is obtained from the second port by the data obtaining means.

An example 9 describes the repeater according to the example 7 or 8, wherein the data preferential transfer means secures a transfer capability enough to realize a predetermined transfer speed and transfers the emergency data to the user terminal in preference to the video data when the emergency data is obtained from the second port by the data obtaining means during transfer of the video data from the first port.

An example 10 describes the repeater according to any one of the examples 7 to 9, wherein the data obtaining means mounts three or more ports, and the data preferential transfer means assigns a priority level respectively to data obtained from each of the ports and transfers data to the user terminal according to the priority level.

An example 11 describes a terminal device on the side of a receiving user configuring a content delivery system along with a repeater for relaying content and obtaining the content to transfer to a TV receiver, comprising:
data creation means for performing format conversion of video data and emergency data received from the repeater to create display video data to be displayed on the TV receiver, wherein
the repeater comprising:
   data obtaining means for mounting a first port for obtaining the video data from a video server via an IP network and a second port for obtaining the emergency data from an emergency server directly connected to the repeater; and
   data preferential transfer means for transferring the emergency data obtained from the second port in preference to the video data obtained from the first port.

An example 12 describes the terminal device according to the example 11, wherein the data creation means converts the emergency data into telop data, converts the video data into a display format of data for the TV receiver, and synthesizes the video data converted into the display format of data and the telop data to create the display video data.

An example 13 describes the terminal device according to the example 11 or 12, wherein the data creation means makes a determination of the emergency data or the video data based on presence or absence of an emergency flag included in data received from the repeater.

An example 14 describes a content delivery method for a content delivery system comprising a repeater for relaying content and a user terminal of a terminal device on the side of a receiving user for obtaining the content from the repeater to transfer to a TV receiver, the method comprising: in the repeater, a first data obtaining step of obtaining, from a first port, video data delivered as the content by a video server via an IP network, a second data obtaining step of obtaining, from a second port, emergency data delivered as the content by an emergency server directly connected to the repeater, and a data preferential transfer step of transferring the emergency data obtained from the second port by the second data obtaining step to the user terminal in preference to the video data obtained from the first port by the first data obtaining step, and the method further comprising: in the user terminal, a data creation step of performing format conversion of the video data and the emergency data received from the repeater to create display video data to be displayed on the TV receiver.

An example 15 describes the content delivery method according to the example 14, wherein the data preferential transfer step includes securing a transfer capability enough to realize a predetermined transfer speed and transferring the emergency data to the user terminal when the emergency data is obtained from the second port by the second data obtaining step.

An example 16 describes the content delivery method according to the example 14 or 15, wherein the data creation step includes converting the emergency data into telop data, converting the video data into a display format of data for the TV receiver and synthesizing the video data converted into the display format of data and the telop data to create the display video data.

An example 17 describes a program used for a content delivery system comprising a repeater for relaying content and a user terminal of a terminal device on the side of a receiving user for obtaining the content from the repeater to transfer to a TV receiver, wherein the program serves to allow a computer of the repeater to realize a data preferential transfer function of transferring emergency data obtained from a second port to the user terminal in preference to video data obtained from a first port, wherein the repeater mounts the first port for obtaining the video data from a video server delivering the video data as the content via an IP network and the second port for obtaining the emergency data from an emergency server directly connected to the repeater and delivering the emergency data as the content; and the program serves to allow a computer of the user terminal to realize a data creation function of performing format conversion of the video data and the emergency data received from the repeater to create display video data to be displayed on the TV receiver.

An example 18 describes the program according to the example 17, wherein the data preferential transfer function secures a transfer capability enough to realize a predetermined transfer speed and transfers the emergency data to the user terminal when the emergency data is obtained from the second port_{.}

An example 19 describes the program according to the example 17 or 18, wherein

the data creation function converts the emergency data into telop data, converts the video data into a display format of data for the TV receiver and synthesizes the video data converted into the display format of data and the telop data to create the display video data.

An example 20 describes the computer-readable recording medium which records the program according to any one of the examples 17 to 19. An exemplary embodiment is summarized as follows.

The present invention aims to provide a content delivery system capable of timely and quickly delivering an emergency broadcast independently of conditions of a network in a broadcasting service using an IP network. For the purpose, the content delivery system according to the present invention includes a repeater for relaying content and a user terminal for transferring the relayed content to a TV receiver. The repeater includes a data obtaining unit that mounts a first port for obtaining video data from a video server via an IP network and a second port for obtaining emergency data from an emergency server directly connected to the repeater; and a data preferential transfer unit that transfers the emergency data obtained from the second port to the user terminal in preference to the video data obtained from the first port. The user terminal includes a data creation unit for performing format conversion of the video data and the emergency data received from the repeater to create display video data to be displayed on the TV receiver.

## Claims

1. A content delivery system comprising a repeater for relaying content and a user terminal of a terminal device on the side of a receiving user for obtaining the content from the repeater to transfer to a TV receiver, wherein the repeater comprises:
data obtaining means for mounting a first port for obtaining video data from a video server delivering the video data as the content via an IP network and a second port for obtaining emergency data from an emergency server directly connected to the repeater and delivering the emergency data as the content; and
data preferential transfer means for transferring the emergency data obtained from the second port to the user terminal in preference to the video data obtained from the first port, and
the user terminal comprises:
data creation means for performing format conversion of the video data and the emergency data received from the repeater to create display video data to be displayed on the TV receiver.

2. A repeater configuring a content delivery system along with a user terminal of a terminal device on the side of a receiving user for obtaining content to transfer to a TV receiver and relaying the content, comprising:
data obtaining means for mounting a first port for obtaining video data from a video server delivering the video data as the content via an IP network and a second port for obtaining emergency data from an emergency server directly connected to the repeater and delivering the emergency data as the content; and
data preferential transfer means for transferring the emergency data obtained from the second port, in preference to the video data obtained from the first port, to the user terminal for performing format conversion of the video data and the emergency data to create display video data to be displayed on the TV receiver.

3. A terminal device on the side of a receiving user configuring a content delivery system along with a repeater for relaying content and obtaining the content to transfer to a TV receiver, comprising- data creation means for performing format conversion of video data and emergency data received from the repeater to create display video data to be displayed on the TV receiver, wherein the repeater comprising:
data obtaining means for mounting a first port for obtaining the video data from a video server via an IP network and a second port for obtaining the emergency data from an emergency server directly connected to the repeater! and
data preferential transfer means for transferring the emergency data obtained from the second port in preference to the video data obtained from the first port.

4. The content delivery system according to claim 1, or the repeater according to claim 2, wherein the data preferential transfer means secures a transfer capability enough to realize a predetermined transfer speed and transfers the emergency data to the user terminal when the emergency data is obtained from the second port by the data obtaining means.

5. The content delivery system according to claims 1 or 4, or the terminal device according to claim 3, wherein the data creation means converts the emergency data into telop data, converts the video data into a display format of data for the TV receiver, and synthesizes the video data converted into the display format of data and the telop data to create the display video data.

6. The content delivery system according to any one of claims 1, 4 or 5, or the repeater according to claim 2 or 4, wherein the data preferential transfer means secures a transfer capability enough to realize a predetermined transfer speed and transfers the emergency data to the user terminal in preference to the video data when the emergency data is obtained from the second port by the data obtaining means during transfer of the video data from the first port.

7. The content delivery system according to any one of claims 1, 4 - 6, or the terminal device according to claim 3 or 5, wherein the data creation means makes a determination of the emergency data or the video data based on presence or absence of an emergency flag included in data received from the repeater.

8. The content delivery system according to any one of claims 1, 4 - 7, or the repeater according to any one of claims 2, 4 or 6, wherein the data obtaining means mounts three or more ports, and the data preferential transfer means assigns a priority level respectively to data obtained from each of the ports and transfers data to the user terminal according to the priority level.

9. A content delivery method for a content delivery system comprising a repeater for relaying content and a user terminal of a terminal device on the side of a receiving user for obtaining the content from the repeater to transfer to a TV receiver, the method comprising: in the repeater, a first data obtaining step of obtaining, from a first port, video data delivered as the content by a video server via an IP network, a second data obtaining step of obtaining, from a second port, emergency data delivered as the content by an emergency server directly connected to the repeater, and a data preferential transfer step of transferring the emergency data obtained from the second port by the second data obtaining step to the user terminal in preference to the video data obtained from the first port by the first data obtaining step, and the method further comprising: in the user terminal, a data creation step of performing format conversion of the video data and the emergency data received from the repeater to create display video data to be displayed on the TV receiver.

10. The content delivery method according to claim 9, wherein the data preferential transfer step includes securing a transfer capability enough to realize a predetermined transfer speed and transferring the emergency data to the user terminal when the emergency data is obtained from the second port by the second data obtaining step.

11. The content delivery method according to claim 9 or 10, wherein the data creation step includes converting the emergency data into telop data, converting the video data into a display format of data for the TV receiver and synthesizing the video data converted into the display format of data and the telop data to create the display video data.

12. A program used for a content delivery system comprising a repeater for relaying content and a user terminal of a terminal device on the side of a receiving user for obtaining the content from the repeater to transfer to a TV receiver, wherein the program serves to allow a computer of the repeater to realize a data preferential transfer function of transferring emergency data obtained from a second port to the user terminal in preference to video data obtained from a first port, wherein the repeater mounts the first port for obtaining the video data from a video server delivering the video data as the content via an IP network and the second port for obtaining the emergency data from an emergency server directly connected to the repeater and delivering the emergency data as the content; and the program serves to allow a computer of the user terminal to realize a data creation function of performing format conversion of the video data and the emergency data received from the repeater to create display video data to be displayed on the TV receiver.

13. The program according to claim 12, wherein the data preferential transfer function secures a transfer capability enough to realize a predetermined transfer speed and transfers the emergency data to the user terminal when the emergency data is obtained from the second port.

14. The program according to claim 12 or 13, wherein the data creation function converts the emergency data into telop data, converts the video data into a display format of data for the TV receiver and synthesizes the video data converted into the display format of data and the telop data to create the display video data.

15. A computer-readable recording medium which records the program according to any one of claims 12 to 14.
